# EUROPEAN PATENT APPLICATION

(11) **EP 2 357 717 A1**
(43) Date of publication of application: **17.08.2011**
(21) Application number: 09831867.8
(22) Date of filing: 04.12.2009
(51) Int. Cl.: H02J 17/00

(54) **NON-CONTACT POWER TRANSMISSION APPARATUS AND POWER TRANSMISSION METHOD USING A NON-CONTACT POWER TRANSMISSION APPARATUS**

(30) Priority: 09.12.2008 JP 2008313632; 09.12.2008 JP 2008313633
(71) Applicant: Kabushiki Kaisha Toyota Jidoshokki, Kariya-shi Aichi 448-8671 (JP); Toyota Jidosha Kabushiki Kaisha, Toyota-shi, Aichi 471-8571 (JP)
(72) Inventor: SAKODA, Shimpei, Kariya-shi Aichi 448-8671 (JP); SUZUKI, Sadanori, Kariya-shi Aichi 448-8671 (JP); TAKADA, Kazuyoshi, Kariya-shi Aichi 448-8671 (JP); NAKATA, Kenichi, Kariya-shi Aichi 448-8671 (JP); YAMAMOTO, Yukihiro, Kariya-shi Aichi 448-8671 (JP); ICHIKAWA, Shinji, Toyota-shi Aichi 471-8571 (JP); ISHIKAWA, Tetsuhiro, Toyota-shi Aichi 471-8571 (JP)
(74) Representative: TBK
(86) International application number: PCT/JP2009/070416
(87) International publication number: WO 2010/067763

(57) **Abstract**

Disclosed is a non-contact power transmission apparatus provided with an AC power source and a resonant system. The resonant system has a primary coil that is connected with the AC power source, a primary-side resonance coil, a secondary-side resonance coil, a secondary coil and a load that is connected with the secondary coil. In addition, the non-contact power transmission apparatus is provided with a state detection unit and a variable-impedance circuit. The state detection unit detects the state of the resonant system. The variable-impedance circuit is constructed so as to adjust its own impedance in accordance with the state of the resonant system detected by the state detection unit, in such a way that the input impedance and the output impedance at the resonant frequency of the resonant system are matching.

## Description

### TECHNICAL FIELD

The present invention relates to a non-contact power transmission apparatus and a power transmission method using the non-contact power transmission apparatus. Specifically, the invention relates to a resonance type non-contact power transmission apparatus and a power transmission method using the non-contact power transmission apparatus.

### BACKGROUND ART

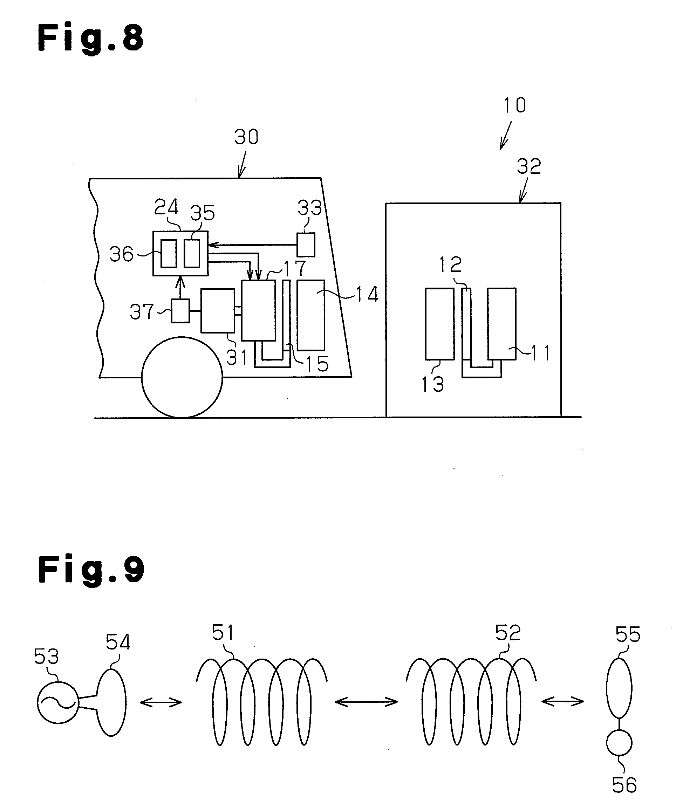

A non-contact power transmission apparatus illustrated in Fig. 9 transmits power from a first copper wire coil 51 to a second copper wire coil 52, which is arranged to be spaced from the first copper wire coil 51, by using resonance of an electromagnetic field. Such non-contact power transmission apparatuses are disclosed in, for example, Non-Patent Document 1 and Patent Document 1. The non-contact power transmission apparatus of Fig. 9 intensifies a magnetic field produced by a primary coil 54 connected to an alternating current power source 53 by means of magnetic field resonance caused by the first and second copper wire coils 51, 52. The non-contact power transmission apparatus supplies to a load 56 the power produced by a secondary coil 55 through the electromagnetic induction of the intensified magnetic field in the proximity of the second copper wire coil 52. It has been confirmed that the non-power transmission apparatus can light a 60 watt light as the load 56 when the first and second copper wire coils 51, 52, each having a radius of 30 cm, are arranged to be spaced apart by 2 m.

### PRIOR ART DOCUMENTS

### Patent Document

Patent Document 1: International Publication WO2007/008646 A2 Non-Patent Document

Non-Patent Document 1: NIKKEI ELECTRONICS, Dec. 3, 2007, pages 117 to Page 128

### SUMMARY OF THE INVENTION

### Problems that the Invention is to Solve

To efficiently supply the power output from the alternating current power source 53 to the load 56, the resonance type non-contact power transmission apparatus must efficiently supply the power output from the alternating current power source 53 to a resonant system (the first and second copper wire coils 51, 52 and the primary and secondary coils 54, 55). However, the above-described references do not clarify the relationship between the resonant frequency of the first copper wire coil 51 at the transmission side (the power transmission side) and the frequency of the alternating voltage of the alternating current power source 53 or the relationship between the resonant frequency of the second copper wire coil 52 at the reception side (the power reception side) and the frequency of the alternating voltage of the alternating current power source 53.

If the distance between the first copper wire coil 51 and the second copper wire coil 52 is constant and the resistance value of the load 56 is constant, the resonant frequency of the resonant system is determined through tests in advance. The alternating voltage having the obtained resonant frequency is then supplied from the alternating current power source 53 to the primary coil 54. However, if at least one of the distance between the first copper wire coil 51 and the second copper wire coil 52 and the resistance value of the load 56 changes, the input impedance of the resonant system also changes. In this case, the output impedance of the alternating current power source 53 does not match with the input impedance of the resonant system, thus increasing the reflected power from the resonant system to the alternating current power source 53. That is, the power output from the alternating current power source 53 cannot be efficiently supplied to the load 56. In other words, the power transmission efficiency is decreased. "The resonant frequency of the resonant system" refers to such a frequency that the power transmission efficiency of the resonant system is maximized.

Accordingly, it is an objective of the present invention to provide a non-contact power transmission apparatus capable of efficiently supplying power output from an alternating current power source to a load without changing the frequency of the alternating voltage of the alternating current power source even if at least one of the distance between two resonance coils configuring a resonant system and the load changes. It is another objective of the invention to provide a power transmission method using the non-contact power transmission apparatus.

### Means for Solving the Problem

To achieve the foregoing objective and in accordance with a first aspect of the present invention, a non-contact power transmission apparatus having an alternating current power source, a resonant system, and a load is provided. The resonant system includes a primary coil connected to the alternating current power source, a primary-side resonance coil, a secondary-side resonance coil, a secondary coil, and a load connected to the secondary coil. The non-contact power transmission apparatus further includes a state detecting section and a variable impedance circuit. The state detecting section detects a state of the resonant system. The variable impedance circuit is configured in such a manner that the impedance of the variable impedance circuit is adjusted based on the state of the resonant system detected by the state detecting section to match an input impedance of the resonant system at a resonant frequency of the resonant system with an output impedance that is impedance of alternating current power source side circuitry excluding the primary coil.

In accordance with a second aspect of the present invention, a non-contact power transmission apparatus having an alternating current power source, a resonant system, and a load is provided. The resonant system includes a primary coil connected to the alternating current power source, a primary-side resonance coil, a secondary-side resonance coil, a secondary coil, and a load connected to the secondary coil. The non-contact power transmission apparatus further includes a variable impedance circuit and a control section that controls the variable impedance circuit. The variable impedance circuit that has a variable reactance element and is arranged between the secondary coil and the load. The control section controls reactance of the variable reactance element with respect to change of a parameter representing a state of the resonant system, thereby adjusting impedance of the variable impedance circuit in such a manner as to prevent change of input impedance of the resonant system at the frequency of alternating voltage output from the alternating current power source.

In accordance with a third aspect of the present invention, a power transmission method using a non-contact power transmission apparatus having an alternating current power source and a resonant system is provided. The resonant system includes a primary coil connected to the alternating current power source, a primary-side resonance coil, a secondary-side resonance coil, a secondary coil, and a load connected to the secondary coil. The power transmission method being includes: arranging a variable impedance circuit between the secondary coil and the load; and adjusting the impedance of the variable impedance circuit in such a manner as to prevent change of input impedance of the resonant system at a frequency of alternating voltage output from the alternating current power source with respect to change of a parameter indicating a state of the resonant system.

### BRIEF DESCRIPTION OF THE DRAWINGS

Fig. 1 is a schematic diagram illustrating a non-contact power transmission apparatus according to a first embodiment of the present invention;
Fig. 2 is a diagram illustrating a charging device and a movable body that configure the non-contact power transmission apparatus of the first embodiment;
Fig. 3 is a graph showing the relationship between the input impedance of the resonant system and the frequency of the alternating voltage at the time when the distance between the primary-side resonance coil and the secondary-side resonance coil illustrated in Fig. 1 is changed;
Fig. 4 is a diagram illustrating a charging device and a movable body that configure a non-contact power transmission apparatus according to a second embodiment of the invention;
Fig. 5 is a schematic diagram illustrating a non-contact power transmission apparatus according to a third embodiment of the invention;
Fig. 6 is a diagram illustrating a charging device and a movable body that configure a non-contact power transmission apparatus according to a third embodiment of the invention;
Fig. 7 is a graph showing the relationship between the input impedance of the resonant system and the frequency of alternating voltage at the time when the distance between the primary-side resonance coil and the secondary-side resonance coil illustrated in Fig. 5 is changed;
Fig. 8 is a diagram illustrating a charging device and a movable body that configure a non-contact power transmission apparatus according to a fourth embodiment of the invention; and
Fig. 9 is a diagram illustrating a conventional non-contact power transmission device.

### MODE FOR CARRYING OUT THE INVENTION

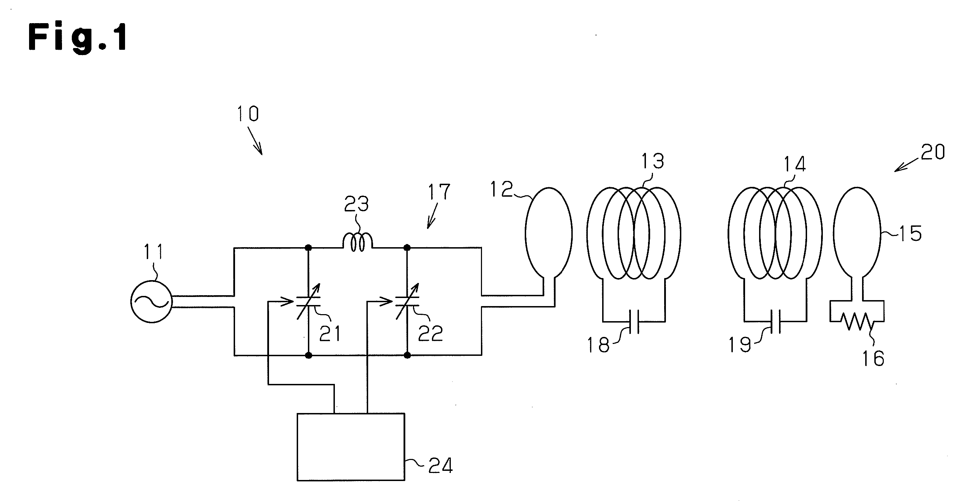

Figs. 1 to 3 illustrate a non-contact power transmission apparatus 10 according to a first embodiment of the present invention.

With reference to Fig. 1, the non-contact power transmission apparatus 10 has an alternating current power source 11, a variable impedance circuit 17, and a resonant system 20. The resonant system 20 of the first embodiment includes a primary coil 12 connected to the variable impedance circuit 17, a primary-side resonance coil 13, a secondary-side resonance coil 14, a secondary coil 15, a load 16 connected to the secondary coil 15, a capacitor 18 connected in parallel to the primary-side resonance coil 13, and a capacitor 19 connected in parallel to the secondary-side resonance coil 14.

The alternating current power source 11 supplies alternating voltage to the variable impedance circuit 17. The alternating current power source 11 may invert DC voltage input from a DC power source to convert it to alternating voltage and supply the alternating voltage to the variable impedance circuit 17. The frequency of the alternating voltage of the alternating current power source 11 is set to the resonant frequency of the resonant system 20.

The primary coil 12, the primary-side resonance coil 13, the secondary-side resonance coil 14, and the secondary coil 15 are formed by electric wires. As the electric wires forming the coils 12, 13, 14, and 15, insulated vinyl-coated wires, for example, are employed. The winding diameters and the numbers of turns of the coils 12, 13, 14, and 15 are set as needed in correspondence with the level of the power to be transmitted. In the first embodiment, the primary coil 12, the primary-side resonance coil 13, the secondary-side resonance coil 14, and the secondary coil 15 are formed with equal winding diameters. The primary-side resonance coil 13 and the secondary-side resonance coil 14 are identical with each other. The capacitor 18 and the capacitor 19 are identical with each other.

The variable impedance circuit 17 has an inductor 23 and two variable capacitors 21, 22 each serving as a variable reactance. The variable capacitor 21 is connected in parallel to the alternating current power source 11. The variable capacitor 22 is connected in parallel to the primary coil 12. The inductor 23 is arranged between the two variable capacitors 21, 22. The capacitance of each of the variable capacitors 21, 22 is controlled by a control section 24. The impedance of the variable impedance circuit 17 is changed by changing the capacitance of each variable capacitor 21, 22. The impedance of the variable impedance circuit 17 is adjusted in such a manner that the input impedance Zin of the resonant system 20 at the resonant frequency of the resonant system 20 matches with the impedance of alternating current power source-side circuitry excluding the primary coil 12. Hereinafter, in the first embodiment and a second embodiment, which will be described below, the impedance of alternating current power source side circuitry excluding the primary coil 12 will be referred to as "output impedance of the alternating current power source 11". Each of the variable capacitors 21, 22 is, for example, a publicly known variable capacitor having a rotary shaft driven by a non-illustrated motor. By operating the motor in response to a drive signal from the control section 24, the capacitance of each variable capacitor 21, 22 is changed.

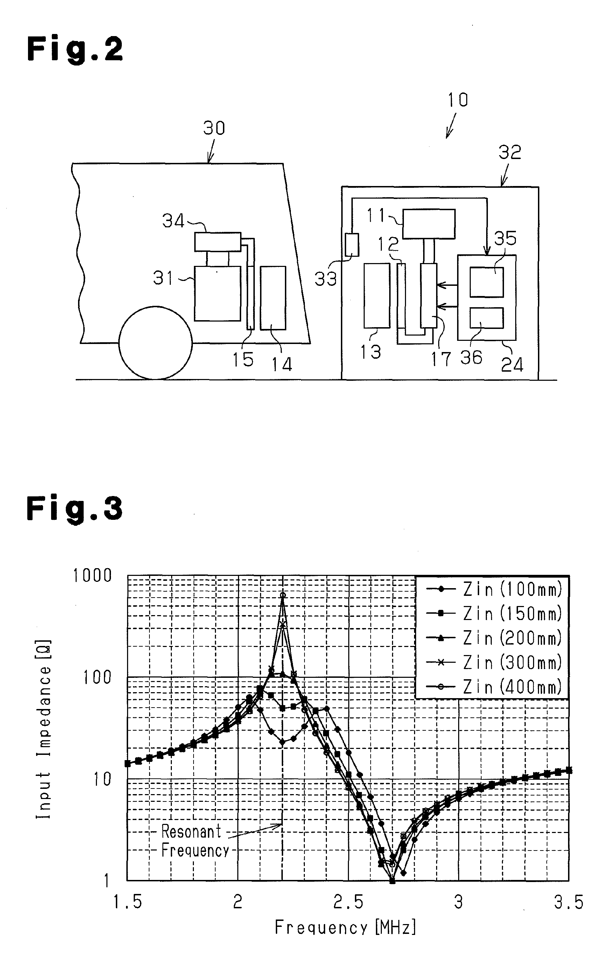

The non-contact power transmission apparatus 10 is used in the non-contact charging system that charges a secondary battery 31 mounted in a movable body 30 (which is, for example, a vehicle) in a non-contact manner. Fig. 2 schematically shows a charging device 32 and the movable body 30, which form the non-contact charging system. The movable body 30 includes the secondary-side resonance coil 14, the secondary coil 15, a rectifier circuit 34, and the secondary battery 31 serving as the load 16. The charging device 32 has the alternating current power source 11, the primary coil 12, the primary-side resonance coil 13, the variable impedance circuit 17, and the control section 24. The charging device 32 charges the secondary battery 31 in a non-contact manner. The charging device 32 is installed in a charging station.

The charging device 32 includes a distance sensor 33 serving as a distance measurement section, which is a state detecting section that detects the state of the resonant system 20. The distance sensor 33 measures the distance between the movable body 30 and the charging device 32 at the time when the movable body 30 is stopped at a charging position. Through such measurement, the distance sensor 33 measures the distance between the primary-side resonance coil 13 and the secondary-side resonance coil 14.

The control section 24 has a CPU 35 and a memory 36. The memory 36 stores, as a map or expressions, data representing the relationship between the distance between the primary-side resonance coil 13 and the secondary-side resonance coil 14 and the input impedance Zin of the resonant system 20 at the resonant frequency of the resonant system 20. The data is obtained in advance through experiments. The memory 36 also stores data representing the relationship between the capacitance of each variable capacitor 21, 22 and the input impedance Zin of the resonant system 20 as data using which the impedance of the variable impedance circuit 17 is adjusted in such a manner that the input impedance Zin of the resonant system 20 and the output impedance of the alternating current power source 11 match with each other without changing the frequency of the alternating voltage of the alternating current power source 11. What is defined by the phrase "the input impedance Zin of the resonant system 20 and the output impedance of the alternating current power source 11 match with each other" is not restricted to complete matching between the two impedances. However, for example, the input impedance Zin of the resonant system 20 and the output impedance of the alternating current power source 11 are permitted to be different in a range where a desired performance is achieved as a non-contact power transmission apparatus, for example, in a range where the power transmission efficiency of the non-contact power transmission apparatus 10 is 80% or higher or in a range where the reflected power from the primary coil 12 to the alternating current power source 11 is 5% or lower. Specifically, for example, as long as the difference between the input impedance Zin of the resonant system 20 and the output impedance of the alternating current power source 11 is in the range of ±10% or, preferably, ±5% of the level of each of the impedances, it is defined that "the two impedances match with each other".

Operation of the non-contact power transmission apparatus 10 of the first embodiment will hereafter be described.

With the movable body 30 stopped at the charging position near the charging device 32, the secondary battery 31 is charged. When the movable body 30 is stopped at the charging position, the distance sensor 33 measures the distance between the movable body 30 and the charging device 32. The control section 24 receives an output signal from the distance sensor 33 and calculates the distance between the primary-side resonance coil 13 and the secondary-side resonance coil 14 based on the measurement of the distance sensor 33. The control section 24 determines the capacitance of each variable capacitor 21, 22 that is suitable for the calculated distance based on the data stored by the memory 36. The control section 24 then outputs a drive signal to the motor of each variable capacitor 21, 22 in such a manner as to adjust the capacitance of the variable capacitor 21, 22 to the value suitable for charging the secondary battery 31. As a result, the capacitance of each variable capacitor 21, 22 is adjusted to the value suitable for the distance between the primary-side resonance coil 13 and the secondary-side resonance coil 14.

Subsequently, by applying alternating voltage having the resonant frequency of the resonant system 20 to the primary coil 12, the alternating current power source 11 causes the primary coil 12 to generate a magnetic field. The magnetic field produced by the primary coil 12 is intensified through magnetic field resonance caused by the primary-side resonance coil 13 and the secondary-side resonance coil 14. The secondary coil 15 thus generates power through the electromagnetic induction effect of the intensified magnetic field in the vicinity of the secondary-side resonance coil 14. The power produced is supplied to the secondary battery 31 through the rectifier circuit 34.

Fig. 3 is a graph showing the relationship between the frequency of the alternating voltage of the alternating current power source 11 and the input impedance Zin of the resonant system 20 that are measured for different distances between the primary-side resonance coil 13 and the secondary-side resonance coil 14. As the distance between the primary-side resonance coil 13 and the secondary-side resonance coil 14 changes, the input impedance Zin of the resonant system 20 at the resonant frequency of the resonant system 20 also changes. Specifically, Fig. 3 shows the relationship between the input impedance Zin of the resonant system 20 and the frequency of the alternating voltage of the alternating current power source 11 in a case in which the diameters of the primary coil 12, the primary-side resonance coil 13, the secondary-side resonance coil 14, and the secondary coil 15 are all approximately 300 mm, the output impedance of the alternating current power source 11 is 50 Ω, and the resistance value of the load 16 is 50 Ω. The input impedance Zin of the resonant system 20 at approximately 2.2 MHz of the resonant frequency of the resonant system 20 increases as the distance between the primary-side resonance coil 13 and the secondary-side resonance coil 14 increases.

If the position at which the movable body 30 stops to charge the secondary battery 31 changes, the distance between the primary-side resonance coil 13 and the secondary-side resonance coil 14 also changes. This changes the input impedance Zin of the resonant system 20 at the resonant frequency of the resonant system 20. Accordingly, if the non-contact power transmission device does not have the variable impedance circuit 17 and the stop position of the movable body 30 for charging the secondary battery 31 changes, the output impedance of the alternating current power source 11 and the input impedance Zin of the resonant system 20 do not match with each other, causing reflected power transfer from the primary coil 12 to the alternating current power source 11.

However, the non-contact power transmission apparatus 10 of the first embodiment includes the variable impedance circuit 17 and indirectly measures the distance between the primary-side resonance coil 13 and the secondary-side resonance coil 14 by means of the distance sensor 33 when the secondary battery 31 is charged. The impedance of the variable impedance circuit 17 is then adjusted in such a manner that the output impedance of the alternating current power source 11 matches with the input impedance Zin of the resonant system 20 corresponding to the measured distance. Accordingly, without changing the frequency of the alternating voltage of the alternating current power source 11, the reflected power from the primary coil 12 to the alternating current power source 11 is reduced. As a result, the power output from the alternating current power source 11 is efficiently supplied to the secondary battery 31.

The first embodiment has the advantages described below.
(1) The non-contact power transmission apparatus 10 has the alternating current power source 11, the variable impedance circuit 17, and the resonant system 20. The resonant system 20 includes the primary coil 12 connected to the variable impedance circuit 17, the primary-side resonance coil 13, the secondary-side resonance coil 14, the secondary coil 15, and the load 16 connected to the secondary coil 15. The variable impedance circuit 17 is arranged between the alternating current power source 11 and the primary coil 12. The non-contact power transmission apparatus 10 also includes the distance sensor 33 serving as the state detecting section that detects the state of the resonant system 20. The impedance of the variable impedance circuit 17 is adjusted based on the detection result of the distance sensor 33 in such a manner that the input impedance Zin of the resonant system 20 at the resonant frequency of the resonant system 20 and the output impedance of the alternating current power source 11 match with each other. Accordingly, in the first embodiment, even if the distance between the primary-side resonance coil 13 and the secondary-side resonance coil 14 changes with respect to the reference value at the time when the resonant frequency of the resonant system 20 has been set, the reflected power from the primary coil 12 to the alternating current power source 11 is decreased without changing the frequency of the alternating voltage of the alternating current power source 11. As a result, the power output from the alternating current power source 11 is efficiently supplied to the load 16.
(2) The non-contact power transmission apparatus 10 includes the distance sensor 33 serving as the distance measurement section that measures the distance between the primary-side resonance coil 13 and the secondary-side resonance coil 14. The impedance of the variable impedance circuit 17 is adjusted based on the measurement result of the distance sensor 33. Accordingly, in the first embodiment, even if the distance between the primary-side resonance coil 13 and the secondary-side resonance coil 14 changes and thus the input impedance Zin of the resonant system 20 changes, the output impedance of the alternating current power source 11 and the input impedance Zin of the resonant system 20 at the resonant frequency of the resonant system 20 are allowed to match with each other through adjustment of the impedance of the variable impedance circuit 17.
(3) The non-contact power transmission apparatus 10 is used in the non-contact charging system that charges the secondary battery 31 mounted in the movable body 30 in a non-contact manner. The charging device 32 installed at the charging station has the distance sensor 33. Accordingly, in the first embodiment, even if the distance between the movable body 30 and the charging device 32 changes each time the movable body 30 stops to charge the secondary battery 31, the input impedance Zin of the resonant system 20 and the output impedance of the alternating current power source 11 are allowed to match with each other without changing the resonant frequency of the resonant system 20. In other words, the secondary battery 31 is efficiently charged. Also in the first embodiment, it is unnecessary to provide distance sensors 33 independently for respective movable bodies 30. Accordingly, the first embodiment simplifies the configuration of the non-contact charging system compared to a case in which the respective movable bodies 30 have the distance sensor 33. Also in the first embodiment, it is unnecessary to stop the movable body 30 at a predetermined position so that the distance between the movable body 30 and the charging device 32 corresponds to a predetermined value. This facilitates operation of the steering wheel, the accelerator pedal, and the brake pedal when the movable body 30 is stopped at a charging position.
(4) The capacitor 18 and the capacitor 19 are connected to the primary-side resonance coil 13 and the secondary-side resonance coil 14, respectively. Accordingly, in the first embodiment, the resonant frequency of the resonant system 20 is reduced without increasing the numbers of turns of the primary-side resonance coil 13 and the secondary-side resonance coil 14. Further, the primary-side and secondary-side resonance coils 13, 14 can be small-sized in the first embodiment compared to a resonant system in which the capacitors 18, 19 are not connected to the corresponding primary-side and secondary-side resonance coils 13, 14, as long as the resonant systems have equal resonant frequencies.

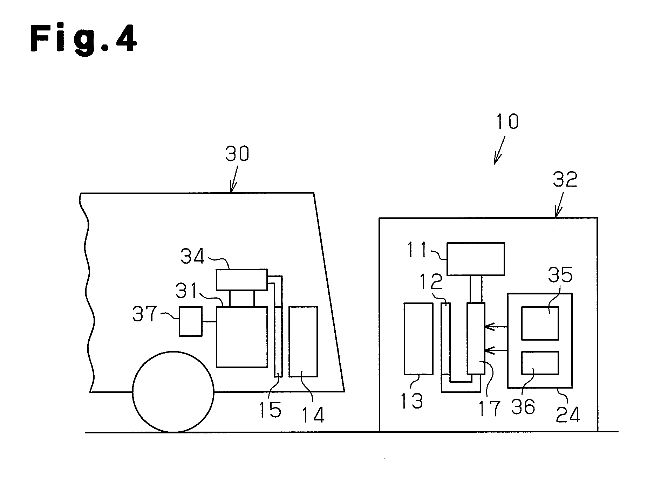

Fig. 4 illustrates the non-contact power transmission apparatus 10 according to the second embodiment of the present invention. The non-contact power transmission apparatus 10 is usable for a case in which the input impedance Zin of the resonant system 20 changes in correspondence with change of the state of the load 16 at the time when the secondary battery 31 is charged. However, the movable body 30 is stopped at a predetermined position so that the distance between the movable body 30 and the charging device 32 corresponds to a predetermined value. In other words, the non-contact power transmission apparatus 10 of the second embodiment has a load detecting section as the state detecting section, instead of the distance measurement section. The load detecting section detects the state of the load 16. Identical reference numerals are given to components of the second embodiment that are identical with corresponding components of the first embodiment without description.

In the second embodiment, the movable body 30 is stopped at the predetermined (charging) position at which the distance between the movable body 30 and the charging device 32 corresponds to the predetermined value. A charge amount sensor 37 serving as the load detecting section, which detects the charge amount of the secondary battery 31, is provided in the movable body 30. Data representing the charge amount of the secondary battery 31 detected by the charge amount sensor 37 is transmitted to the charging device 32 through a non-illustrated wireless communication device.

The memory 36 stores, as a map or an expression, data representing the relationship between the charge amount of the secondary battery 31 and the input impedance Zin of the resonant system 20 corresponding to the respective values of the charge amount. The memory 36 also stores data representing the relationship between the capacitance of each variable capacitor 21, 22 and the input impedance Zin of the resonant system 20 as data using which the impedance of the variable impedance circuit 17 is adjusted in such a manner that the input impedance Zin of the resonant system 20 and the output impedance of the alternating current power source 11 match with each other without changing the frequency of the alternating voltage of the alternating current power source 11.

With the movable body 30 stopped at the charging position, the secondary battery 31 is charged. Once the movable body 30 stops at the charging position, the charge amount sensor 37 starts detecting the charge amount of the secondary battery 31. Data representing the charge amount of the secondary battery 31 is transmitted from the charge amount sensor 37 to the charging device 32 through the wireless communication device. When the control section 24 receives the data representing the charge amount, the control section 24 obtains the input impedance Zin of the resonant system 20 corresponding to the charge amount from the data stored by the memory 36. The control section 24 then determines the capacitor of each variable capacitor 21, 22 from the aforementioned data in such a manner that the obtained input impedance Zin of the resonant system 20 and the output impedance of the alternating current power source 11 match with each other. Subsequently, the control section 24 outputs a drive signal to the motor of each variable capacitor 21, 22 in such a manner as to adjust the capacitance of the variable capacitor 21, 22 to the value suitable for charging the secondary battery 31. The capacitance of each variable capacitor 21, 22 is thus adjusted to the value suitable for the charge amount of the secondary battery 31.

Then, the alternating current power source 11 applies the alternating voltage having the resonant frequency of the resonant system 20 to the primary coil 12, thus starting to charge the secondary battery 31. When the secondary battery 31 is charged, the charge amount sensor 37 detects the charge amount of the secondary battery 31 and transmits detection data to the charging device 32. The control section 24 determines the capacitance of each variable capacitor 21, 22 suitable for the detected charge amount from the data representing the charge amount of the secondary battery 31. The control section 24 also adjusts the capacitance of each variable capacitor 21, 22 in such a manner that such capacitance corresponds to the value suitable for the charge amount. As a result, even when the charge amount of the secondary battery 31 changes as the secondary battery 31 is charged and thus the input impedance Zin of the resonant system 20 changes, the impedance of the variable impedance circuit 17 is adjusted in such a manner that the output impedance of the alternating current power source 11 matches with the input impedance Zin of the resonant system 20.

The second embodiment has the advantages described below in addition to the advantage (4) of the first embodiment.
(5) The non-contact power transmission apparatus 10 of the second embodiment has the charge amount sensor 37 serving as the load detecting section that detects the state of the load 16. The impedance of the variable impedance circuit 17 is adjusted based on the detection result of the charge amount sensor 37 in such a manner that the input impedance Zin of the resonant system 20 at the resonant frequency of the resonant system 20 and the output impedance of the alternating current power source 11 match with each other. Accordingly, in the second embodiment, even if the state of the load 16 changes and thus the input impedance Zin of the resonant system 20 changes while the power is transmitted from the charging device 32 to the movable body 30 in a non-contact manner, the reflected power from the primary coil 12 to the alternating current power source 11 is reduced without changing the frequency of the alternating voltage of the alternating current power source 11. As a result, the power output from the alternating current power source 11 is efficiently supplied to the load 16.
(6) The non-contact power transmission apparatus 10 of the second embodiment is used in the non-contact charging system that charges the secondary battery 31 mounted in the movable body 30 in a non-contact manner. When the secondary battery 31 is charged, the movable body 30 stops at the predetermined position so that the distance between the movable body 30 and the charging device 32 corresponds to the predetermined value. The movable body 30 has the charge amount sensor 37 that detects the charge amount of the secondary battery 31. The control section 24 adjusts the impedance of the variable impedance circuit 17 based on the detection data of the charge amount sensor 37 in such a manner that the input impedance Zin of the resonant system 20 and the output impedance of the alternating current power source 11 match with each other even if the input impedance Zin of the resonant system 20 changes. As a result, the secondary battery 31 is charged with improved efficiency.

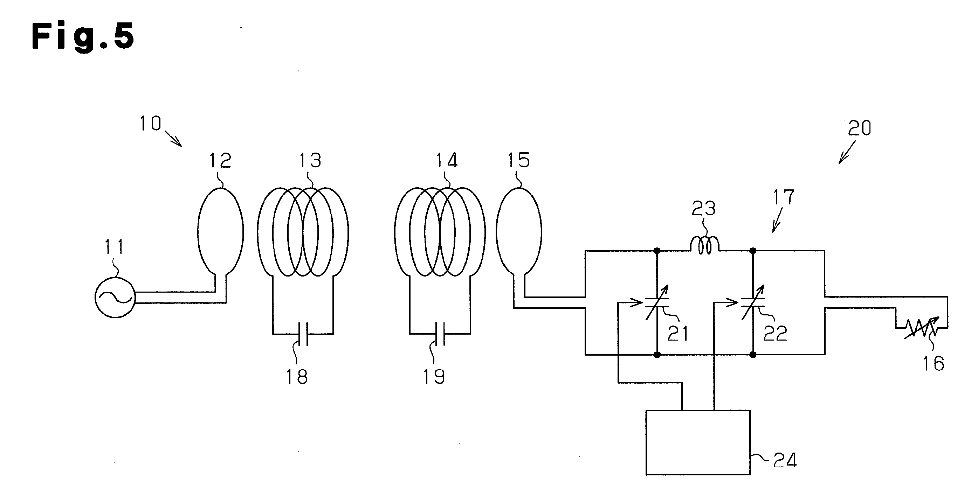

Figs. 5 to 7 illustrate a non-contact power transmission apparatus 10 according to a third embodiment of the present invention. Identical reference numerals are given to components of the third embodiment that are identical with corresponding components of the first embodiment without description.

With reference to Fig. 5, in the non-contact power transmission apparatus 10 of the third embodiment, the variable impedance circuit 17 is arranged between the secondary coil 15 and the load 16. The resonant system 20 of the third embodiment has the primary coil 12, the primary-side resonance coil 13, the secondary-side resonance coil 14, the secondary coil 15, the load 16, and the variable impedance circuit 17.

The alternating current power source 11 supplies alternating voltage to the primary coil 12. The frequency of the alternating voltage of the alternating current power source 11 is set to the resonant frequency of the resonant system 20.

The control section 24 adjusts the impedance of the variable impedance circuit 17 to prevent change of the input impedance Zin of the resonant system 20 corresponding to change of a parameter indicating the state of the resonant system 20. The impedance of the variable impedance circuit 17 is adjusted by controlling the capacitance (the reactance) of each variable capacitor 21, 22. Hereinafter, in the third embodiment and a fourth embodiment, which will be described below, impedance of secondary battery side circuitry excluding_the secondary coil 15 will be referred to as "load-side impedance".

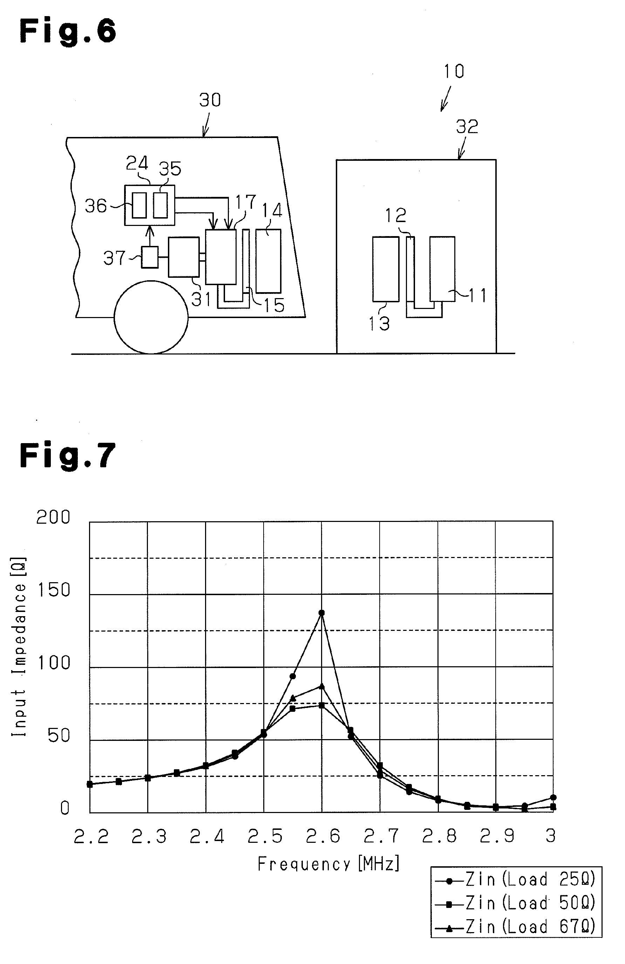

The non-contact power transmission apparatus 10 of the third embodiment is used in the non-contact charging system that charges the secondary battery 31 mounted in the movable body 30 (which is, for example, a vehicle) in a non-contact manner. Fig. 6 schematically illustrates the charging device 32 and the movable body 30 configuring the non-contact charging system. The movable body 30 includes the secondary-side resonance coil 14, the secondary coil 15, the secondary battery 31 serving as the load 16, the variable impedance circuit 17, the control section 24, and the charge amount sensor 37 serving as the load detecting section.

The memory 36 of the control section 24 of the third embodiment stores, as a map or an expression, data representing the relationship between the charge amount of the secondary battery 31 and the capacitance of each variable capacitor 21, 22 representing data used to set the load-side impedance to the reference value at the time when the resonant frequency of the resonant system 20 has been set. The data representing the relationship between the charge amount and the capacitance is determined in advance through testing. The control section 24 adjusts the impedance of the variable impedance circuit 17 by changing the capacitance of each variable capacitor 21, 22 based on the detection result of the charge amount sensor 37 in such a manner as to prevent change of the load-side impedance.

The charging device 32 is installed at the charging station. The charging device 32 of the third embodiment has the alternating current power source 11, the primary coil 12, and the primary-side resonance coil 13.

Operation of the non-contact power transmission apparatus 10 of the third embodiment will now be described.

The secondary battery 31 is charged with the movable body 30 stopped at the predetermined (charging) position so that the distance between the movable body 30 and the charging device 32 corresponds to the predetermined value. Once the movable body 30 stops at the charging position, the charge amount sensor 37 starts detecting the charge amount of the secondary battery 31. The data representing the charge amount of the secondary battery 31 is transmitted from the charge amount sensor 37 to the control section 24. When the control section 24 receives the data representing the charge amount, the control section 24 determines the capacitance of each variable capacitor 21, 22 corresponding to the charge amount based on the data stored by the memory 36. Subsequently, the control section 24 outputs a drive signal to the motor of each variable capacitor 21, 22 in such a manner as to adjust the capacitance of the variable capacitor 21, 22 to the value suitable for charging the secondary battery 31. The capacitances of the variable capacitors 21, 22 are thus adjusted to the values suitable for charging the secondary battery 31. In other words, the capacitance of each variable capacitor 21, 22 is adjusted to such a value that the load-side impedance is prevented from changing even if the charge amount of the secondary battery 31 changes.

Then, by applying the alternating voltage to the primary coil 12, the alternating current power source 11 causes the primary coil 12 to produce a magnetic field. The frequency of the alternating voltage is the resonant frequency of the resonant system 20. The non-contact power transmission apparatus 10 reinforces the magnetic field produced by the primary coil 12 through magnetic field resonance brought about by the primary-side resonance coil 13 and the secondary-side resonance coil 14. The non-contact power transmission apparatus 10 thus causes the secondary coil 15 to generate power through the electromagnetic induction effect of the intensified magnetic field in the vicinity of the secondary-side resonance coil 14. The power is then supplied to the secondary battery 31.

When the secondary battery 31 is charged, the charge amount sensor 37 detects the charge amount of the secondary battery 31 and transmits the detection data to the control section 24. The control section 24 determines the capacitance of each variable capacitor 21, 22 suitable for the detected charge amount based on the data representing the charge amount of the secondary battery 31. The control section 24 also adjusts the capacitance of each variable capacitor 21, 22 in such a manner that such capacitance corresponds to the value suitable for the charge amount. As a result, the impedance of the variable impedance circuit 17 is adjusted in such a manner that the load-side impedance does not change even if the charge amount of the secondary battery 31 changes when the secondary battery 31 is charged. This prevents the input impedance Zin of the resonant system 20 from changing. In other words, the impedance of the variable impedance circuit 17 is adjusted in such a manner as to prevent change of the input impedance of the resonant system 20 corresponding to change of a parameter representing the state of the resonant system 20 (which is, in the third embodiment, the charge amount of the secondary battery 31 serving as the load).

Fig. 7 shows the relationship between the frequency of the alternating voltage of the alternating current power source 11 and the input impedance Zin of the resonant system 20 in a case in which the resistance value of the load 16 is changed. With reference to Fig. 7, even if the resistance value of the load 16 changes, the resonant frequency of the resonant system 20 (in Fig. 7, 2.6 MHz) does not change. However, the input impedance Zin of the resonant system 20 at the resonant frequency changes. The alternating current power source 11 outputs alternating voltage having a resonant frequency set in advance in such a manner that the input impedance Zin of the resonant system 20 and the output impedance of the alternating current power source 11 match with each other. Accordingly, if the charge amount of the secondary battery 31 serving as the load changes when the secondary battery 31 is charged and thus the input impedance Zin of the resonant system 20 decreases, the output impedance of the alternating current power source 11 and the input impedance Zin of the resonant system 20 may not match with each other. This may produce reflected power from the primary coil 12 to the alternating current power source 11, disadvantageously.

However, in the non-contact power transmission apparatus 10 of the third embodiment, the charge amount sensor 37 detects the charge amount of the secondary battery 31 when the secondary battery 31 is charged. The control section 24 then determines the capacitance of each variable capacitor 21, 22 in such a manner as to prevent change of the load-side impedance. The capacitance of each variable capacitor 21, 22 is thus adjusted to the value corresponding to the charge amount of the secondary battery 31. This maintains the input impedance Zin of the resonant system 20 constant, regardless of the charge amount of the secondary battery 31.
The third embodiment has the advantages described below in addition to the advantage (4) of the first embodiment.
(7) The non-contact power transmission apparatus 10 has the variable impedance circuit 17 arranged between the secondary coil 15 and the load 16. The primary coil 12, the primary-side resonance coil 13, the secondary-side resonance coil 14, the secondary coil 15, the load 16, and the variable impedance circuit 17 configure the resonant system 20. The control section 24 adjusts the impedance of the variable impedance circuit 17 in such a manner as to prevent change of the input impedance Zin of the resonant system 20 corresponding to change of the parameter representing the state of the resonant system 20. As a result, in the third embodiment, the reflected power from the primary coil 12 to the alternating current power source 11 is reduced without changing the frequency of the alternating voltage of the alternating current power source 11 even if the state of the load 16 is changed from the reference value at the time when the resonant frequency of the resonant system 20 has been set. As a result, the power is efficiently supplied from the alternating current power source 11 to the load 16.
(8) The non-contact power transmission apparatus 10 has the charge amount sensor 37, which detects the state of the load 16. The impedance of the variable impedance circuit 17 is adjusted based on the detection result of the charge amount sensor 37. Accordingly, in the third embodiment, the reflected power from the primary coil 12 to the alternating current power source 11 is decreased without changing the frequency of the alternating voltage of the alternating current power source 11, even if the input impedance Zin of the resonant system 20 is changed by change of the load 16 when the power is transmitted from the primary-side resonance coil 13 to the secondary-side resonance coil 14 in a non-contact manner. As a result, the power is efficiently supplied from the alternating current power source 11 to the load 16.
(9) The non-contact power transmission apparatus 10 is used in the non-contact power transmission system that charges the secondary battery 31, which is mounted in the movable body 30, in a non-contact manner. To charge the secondary battery 31, the movable body 30 is stopped at the position corresponding to the constant distance from the charging device 32. The movable body 30 has the charge amount sensor 37, which detects the charge amount of the secondary battery 31. The control section 24 adjusts the impedance of the variable impedance circuit 17 in such a manner as to prevent the load-side impedance from being changed by change of the charge amount of the secondary battery 31. As a result, the secondary battery 31 is charged efficiently.

Fig. 8 illustrates a fourth embodiment of the present invention. In the fourth embodiment, the movable body 30 stops at different stop positions when the secondary battery 31 is charged. The embodiment is applied to a case in which the distance between the primary-side resonance coil 13 and the secondary-side resonance coil 14 varies each time the movable body 30 stops, thus changing the input impedance Zin of the resonant system 20. Identical reference numerals are given to components of the fourth embodiment that are identical with corresponding components of the third embodiment without description.

The movable body 30 includes the distance sensor 33 of the first embodiment as the distance measurement section, in addition to the charge amount sensor 37.

The memory 36 stores, as a map or an expression, data representing the relationship between the charge amount of the secondary battery 31 and the input impedance Zin of the resonant system 20 corresponding to the charge amount. The data corresponds to various values of the distance between the primary-side resonance coil 13 and the secondary-side resonance coil 14. The data is obtained in advance through testing. Further, the memory 36 stores data representing the relationship between the distance between the primary-side resonance coil 13 and the secondary-side resonance coil 14 and the capacitance of each variable capacitor 21, 22 as data used to set the load-side impedance to the reference value at the time when the resonant frequency has been set. The data corresponds to various values of the charge amount of the secondary battery 31.

With the movable body 30 stopped at a charging position in the vicinity of the charging device 32, the secondary battery 31 is charged. Once the movable body 30 stops at the charging position, the distance sensor 33 measures the distance between the movable body 30 and the charging device 32. Further, the charge amount sensor 37 detects the charge amount of the secondary battery 31. The measurement data of the distance sensor 33 and the detection data of the charge amount sensor 37 are transmitted to the control section 24. The control section 24 determines the distance between the primary-side resonance coil 13 and the secondary-side resonance coil 14 from the measurement data of the distance sensor 33 using the data stored by the memory 36. When the control section 24 receives data representing the charge amount, the control section 24 determines the capacitance suitable for each variable capacitor 21, 22 corresponding to the distance between the primary-side resonance coil 13 and the secondary-side resonance coil 14 from the data stored by the memory 36. The control section 24 then provides the variable impedance circuit 17 with a drive signal for adjusting the capacitance of each variable capacitor 21, 22 in such a manner that the capacitance of the variable capacitor 21, 22 corresponds to the capacitance determined from the data. As a result, the capacitances of the variable capacitors 21, 22 are changed to the values suitable for the charge amount of the secondary battery 31.

Subsequently, the alternating current power source 11 supplies the alternating voltage having the resonant frequency of the resonant system 20 to the primary coil 12, thus starting to charge the secondary battery 31. When the secondary battery 31 is charged, the charge amount sensor 37 detects the charge amount of the secondary battery 31 and transmits the detection data to the charging device 32. The control section 24 determines the capacitance of each variable capacitor 21, 22 suitable for the detected charge amount based on data representing the charge amount of the secondary battery 31. The control section 24 adjusts the capacitance of each variable capacitor 21, 22 in such a manner that the capacitance of the variable capacitor 21, 22 corresponds to the value suitable for the charge amount. As a result, the impedance of the variable impedance circuit 17 is adjusted in such a manner as to prevent change of the load-side impedance, or, in other words, the input impedance Zin of the resonant system 20, even if the charge amount of the secondary battery 31 changes when the secondary battery 31 is charged.

The fourth embodiment has the advantage described below in addition to the advantages (1), (3), and (4).
(10) The non-contact power transmission apparatus 10 includes the charge amount sensor 37 serving as the load detecting section for detecting the state of the secondary battery 31 and the distance sensor 33 serving as the distance measurement section for measuring the distance between the primary-side resonance coil 13 and the secondary-side resonance coil 14. The control section 24 adjusts the impedance of the variable impedance circuit 17 based on the measurement result of the distance sensor 33 and the detection result of the charge amount sensor 37. As a result, in the fourth embodiment, the power output from the alternating current power source 11 is efficiently supplied to the secondary battery 31 without changing the frequency of the alternating voltage of the alternating current power source 11 even if the distance between the primary-side resonance coil 13 and the secondary-side resonance coil 14 and the charge amount of the secondary battery 31 are both changed.

The present invention is not restricted to the illustrated embodiments but may be embodied in the forms described below.

In the second embodiment, the distance sensor 33 may be mounted in the charging device 32. In this case, the impedance of the variable impedance circuit 17 is adjusted taking into consideration the stop position of the movable body 30 and change of the load of the secondary battery 31 at the time when the secondary battery 31 is charged. In other words, even though the movable body 30 does not stop at the predetermined position corresponding to the constant distance from the charging device 32 when the secondary battery 31 is charged, the impedance of the variable impedance circuit 17 is adjusted in such a manner that the secondary battery 31 is charged under an optimal condition in correspondence with the input impedance Zin of the resonant system 20 changed by charging the secondary battery 31.

In the first and second embodiments, if the non-contact power transmission apparatus 10 is used in the charging system for the secondary battery 31 mounted in the movable body 30, charging may be performed on not only secondary batteries 31 of an identical rating capacity but also secondary batteries 31 of different rating capacities. For example, the memory 36 of the control section 24 may store the relationship between the distance between the primary-side resonance coil 13 and the secondary-side resonance coil 14 and the values of the input impedance Zin of the resonant system 20 at the resonant frequency of the resonant system 20 corresponding to the distance for each of the different rating capacities of the secondary batteries 31. Alternatively, the memory 36 of the control section 24 may store data representing the relationship between the charge amount of the secondary battery 31 and the input impedance Zin of the resonant system 20 corresponding to the charge amount for each of the rating capacities of the secondary batteries 31. The control section 24 calculates the suitable capacitance of each variable capacitor 21, 22 corresponding to the input impedance Zin of the resonant system 20 at the time when the secondary battery 31 is charged, using the rating capacity of the secondary battery 31 mounted in the movable body 30. The control section 24 also adjusts the impedance of the variable impedance circuit 17.

In the second to fourth embodiments, a sensor that directly detects the state of the load may be employed as the load detecting section, instead of calculating, based on change of the charge amount of the secondary battery 31, change of the load of the secondary battery 31 at the time when the secondary battery 31 is charged. For example, an electric current sensor that detects the amount of an electric current supplied to the secondary battery 31 may be employed as the load detecting section.

In each of the illustrated embodiments, the non-contact power transmission apparatus 10 may be employed in a case using an electric device having load that changes in a stepped manner when in use as the load. Alternatively, the non-contact power transmission apparatus 10 may be used in a device that supplies power to a plurality of electric devices having different load values.

For the non-contact power transmission apparatus 10 of the third and fourth embodiments, only the distance between the primary-side resonance coil 13 and the secondary-side resonance coil 14 may be considered as a factor changing the input impedance Zin of the resonant system 20 at the resonant frequency of the resonant system 20. Specifically, the non-contact power transmission apparatus 10 may only have a distance measurement section (the distance sensor 33) without a load detecting section (the charge amount sensor 37). For example, in the fourth embodiment, the charge amount sensor 37 may be omitted from the movable body 30, thus making it unnecessary for the memory 36 to store the data representing the charge amount of the secondary battery 31. In this case, the control section 24 adjusts the impedance of the variable impedance circuit 17 based on the measurement result of the distance measurement section (the distance sensor 33). Also in this case, the power output from the alternating current power source 11 is efficiently supplied to the secondary battery 31 without changing the frequency of the alternating voltage of the alternating current power source 11 even if the distance between the primary-side resonance coil 13 and the secondary-side resonance coil 14 changes. Further, since it is unnecessary to stop the movable body 30 at the position corresponding to a set distance from the charging device 32, operation to stop the movable body 30 at a charging position is facilitated.

If the non-contact power transmission apparatus 10 of the third and fourth embodiments is used in the charging system for the secondary battery 31 mounted in the movable body 30, charging may be carried out on not only secondary batteries 31 having an identical rating capacity but also secondary batteries 31 having different rating capacities. For example, the memory 36 of the control section 24 may store, as a map or an expression, the relationship between the distance between the resonance coils 13, 14 and the capacitance of each variable capacitor 21, 22 and the relationship between the charge amount of the secondary battery 31 and the capacitance of the variable capacitor 21, 22, as data used to set the load-side impedance to the reference value at the time when the resonant frequency of the resonant system 20 has been set. The control section 24 calculates the suitable capacitance of each variable capacitor 21, 22 at the time when the secondary battery 31 is charged, using the rating capacity of the secondary battery 31 mounted in the movable body 30. The control section 24 also adjusts the impedance of the variable impedance circuit 17.

If the non-contact power transmission apparatus 10 of each of the illustrated embodiments is used in a non-contact charging system using as the load 16 an electric device having load that changes in a stepped manner or in a non-contact charging system using as the load 16 an electric device having load that changes at a predetermined timing, the impedance of the variable impedance circuit 17 may be adjusted in correspondence with the time that elapses since the time at which the load 16 starts to operate (the non-contact power transmission apparatus 10 starts to transmit the power).

In each of the illustrated embodiments, the variable impedance circuit 17 does not necessarily have to include the two variable capacitors 21, 22 and the single inductor 23. For example, by omitting either one of the variable capacitors 21, 22 configuring the variable impedance circuit 17, the variable impedance circuit 17 may be configured by a single variable capacitor and the single inductor 23. Alternatively, the variable impedance circuit 17 may be configured by a fixed capacitance type capacitor and a variable inductor.

In each of the illustrated embodiments, the capacitor 18 connected to the primary-side resonance coil 13 and the capacitor 19 connected to the secondary-side resonance coil 14 may be omitted. However, compared to the case without the capacitors 18, 19, the resonant frequency is decreased when the capacitor 18 and the capacitor 19 are connected to the primary-side resonance coil 13 and the secondary-side resonance coil 14, respectively. Also, in this state, the primary-side resonance coil 13 and the secondary-side resonance coil 14 are reduced in size compared to the case without the capacitors 18, 19.

In each of the illustrated embodiments, the frequency of the alternating voltage of the alternating current power source 11 may be changeable or unchangeable.

In each of the illustrated embodiments, the shapes of the primary coil 12, the primary-side resonance coil 13, the secondary-side resonance coil 14, and the secondary coil 15 are not restricted to cylindrical shapes. Each of these components may be formed in, for example, a polygonal tubular shape such as a rectangular tubular shape, a hexagonal tubular shape, and a triangular tubular shape or an oval tubular shape.

In each of the illustrated embodiments, the shapes of the primary coil 12, the primary-side resonance coil 13, the secondary-side resonance coil 14, and the secondary coil 15 are not restricted to the symmetrical shapes but may be asymmetrical shapes.

In each of the illustrated embodiments, the electric wires are not restricted to common copper wires having a circular cross section but may be flat copper wires having a rectangular cross section.

In each of the illustrated embodiments, the material forming the electric wires is not restricted to copper but, may be aluminum or silver.

In each of the illustrated embodiments, the primary-side resonance coil 13 and the secondary-side resonance coil 14 are not restricted to coils formed by winding an electric wire into a cylindrical shape, but may be formed by winding an electric wire on a single plane.

In each of the illustrated embodiments, the primary coil 12, the primary-side resonance coil 13, the secondary-side resonance coil 14, and the secondary coil 15 do not necessarily have to have equal diameters. For example, the primary-side resonance coil 13 and the secondary-side resonance coil 14 may have the same diameter and the primary coil 12 and the secondary coil 15 may be different from each other. Alternatively, the primary and secondary coils 12, 15 may have a different diameter from the diameter of the coils 14, 15.

In each of the illustrated embodiments, instead of forming the primary coil 12, the primary-side resonance coil 13, the secondary side resonance coil 14, and the secondary coil 15 with wires, these coils may be formed by wiring patterns on substrates.

### DESCRIPTION OF REFERENCE NUMERALS

11... Alternating current power source, 12... Primary coil, 13... Primary-side resonance coil, 14... Secondary-side resonance coil, 15... Secondary coil, 16... Load, 17... Variable impedance circuit, 20... Resonant system, 33... Distance sensor serving as distance measurement section, 37... Charge amount sensor serving as load detecting section.

## Claims

1. A non-contact power transmission apparatus comprising an alternating current power source and a resonant system, the resonant system including a primary coil connected to the alternating current power source, a primary-side resonance coil, a secondary-side resonance coil, a secondary coil, and a load connected to the secondary coil, the non-contact power transmission apparatus being **characterized by**:
a state detecting section that detects a state of the resonant system; and
a variable impedance circuit arranged between the alternating current power source and the primary coil,
wherein the variable impedance circuit is configured in such a manner that the impedance of the variable impedance circuit is adjusted based on the state of the resonant system detected by the state detecting section to match an input impedance of the resonant system at a resonant frequency of the resonant system with an output impedance that is impedance of alternating current power source side circuitry excluding the primary coil.

2. The non-contact power transmission apparatus according to claim 1, wherein
the state detecting section includes a distance measurement section that measures the distance between the primary-side resonance coil and the secondary-side resonance coil, and
the variable impedance circuit is configured in such a manner that the impedance of the variable impedance circuit is adjusted based on the distance measured by the distance measurement section.

3. The non-contact power transmission apparatus according to claim 1, wherein
the state detecting section includes a load detecting section that detects a state of the load,
and
the variable impedance circuit is configured in such a manner that the impedance of the variable impedance circuit is adjusted based on the state of the load detected by the load detecting section.

4. The non-contact power transmission apparatus according to any one of claims 1 to 3, wherein
the variable impedance circuit includes a variable capacitor and an inductor,
the non-contact power transmission apparatus further includes a control section that outputs a drive signal for controlling capacitance of the variable capacitor,
the control section has a memory that stores data representing the relationship between the input impedance of the resonant system and the capacitance of the variable capacitor, and
the control section adjusts the capacitance of the variable capacitor using the data in such a manner that the input impedance of the resonant system and the output impedance match with each other.

5. The non-contact power transmission apparatus according to any one of claims 1 to 4, wherein
the non-contact power transmission apparatus is used in a charging system for charging a secondary battery serving as the load and mounted in a movable body,
the charging system includes a charging device installed at a charging station,
the movable body includes the secondary-side resonance coil and the secondary coil in addition to the secondary battery, and
the charging device includes the alternating current power source, the primary coil, the primary-side resonance coil, the variable impedance circuit, the state detecting section, and a control section that controls the variable impedance circuit.

6. A non-contact power transmission apparatus having an alternating current power source and a resonant system, the resonant system including a primary coil connected to the alternating current power source, a primary-side resonance coil, a secondary-side resonance coil, a secondary coil, and a load connected to the secondary coil, the non-contact power transmission apparatus being **characterized by**:
a variable impedance circuit that has a variable reactance element and is arranged between the secondary coil and the load, and
a control section that controls the variable impedance circuit,
wherein the control section controls reactance of the variable reactance element with respect to change of a parameter representing a state of the resonant system, thereby adjusting impedance of the variable impedance circuit in such a manner as to prevent change of input impedance of the resonant system at the frequency of alternating voltage output from the alternating current power source.

7. The non-contact power transmission apparatus according to claim 6, further comprising a load detecting section that detects a state of the load,
wherein the control section adjusts the impedance of the variable impedance circuit based on the state of the load detected by the load detecting section.

8. The non-contact power transmission apparatus according to claim 6, further comprising a distance measurement section that measures the distance between the primary-side resonance coil and the secondary-side resonance coil, and
the control section adjusts the impedance of the variable impedance circuit based on the distance between the primary-side resonance coil and the secondary-side resonance coil measured by the distance measurement section.

9. The non-contact power transmission apparatus according to claim 6, further comprising:
a load detecting section that detects a state of the load; and
a distance measurement section that measures the distance between the primary-side resonance coil and the secondary-side resonance coil,
wherein the control section adjusts impedance of the variable impedance circuit based on the state of the load detected by the load detecting section and the distance between the primary-side resonance coil and the secondary-side resonance coil measured by the distance measurement section.

10. The non-contact power transmission apparatus according to any one of claims 7 to 9, wherein
the variable impedance circuit includes a variable capacitor and an inductor,
the control section has a memory that stores data representing the relationship between the parameter indicating the state of the resonant system and the capacitance of the variable capacitor, and
the control section adjusts the capacitance of the variable capacitor using the data in such a manner that the impedance of load side circuitry excluding the secondary coil is matched with a predetermined reference value.

11. The non-contact power transmission apparatus according to any one of claims 6 to 10, wherein
the non-contact power transmission apparatus is used in a charging system that charges a secondary battery serving as the load and mounted in a movable body,
the charging system has a charging device installed at a charging station,
the movable body includes the secondary-side resonance coil, the secondary coil, the variable impedance circuit, the secondary battery, the control section, and a detecting section that detects the parameter indicating the state of the resonant system, and
the charging device includes the alternating current power source, the primary coil, and the primary-side resonance coil.

12. A power transmission method using a non-contact power transmission apparatus having an alternating current power source and a resonant system, the resonant system including a primary coil connected to the alternating current power source, a primary-side resonance coil, a secondary-side resonance coil, a secondary coil, and a load connected to the secondary coil, the power transmission method being **characterized by**:
arranging a variable impedance circuit between the secondary coil and the load; and
adjusting the impedance of the variable impedance circuit in such a manner as to prevent change of input impedance of the resonant system at a frequency of alternating voltage output from the alternating current power source with respect to change of a parameter indicating a state of the resonant system.

13. The power transmission method according to claim 12, wherein
the variable impedance circuit includes a variable capacitor and an inductor, and
the power transmission method further comprises adjusting the capacitance of the variable capacitor using data representing the relationship between the parameter indicating the state of the resonant system and the capacitance of the variable capacitor in such a manner that impedance of load side circuitry excluding the secondary coil is matched with a predetermined reference value.
